# EUROPEAN PATENT APPLICATION

(11) **EP 1 157 814 A1**
(43) Date of publication of application: **28.11.2001**
(21) Application number: 01107998.5
(22) Date of filing: 29.03.2001
(51) Int. Cl.: B29D 31/50

(54) **Rotary machine for the production of PVC boots and footwear in general, equipped with partially tiltable front mould-holder**

(30) Priority: 26.05.2000 IT PD000143
(71) Applicant: Ottogalli Businaro srl, 35020 Albignasego(PD) (IT)
(72) Inventor: Luigi, Roveroni, 35020 Albignasego (IT); Angi, Nicola, 35020 Albignasego (IT); Bontà, Damiano, 35020 Albignasego (IT)
(74) Representative: Gustorf, Gerhard, Dipl.-Ing.

(57) **Abstract**

The invention is a new rotary machine for the production of PVC boots and footwear in general, in two or more colours and/or materials, in which the front mould-holder (P3) is divided in two sections hinged to each other on a horizontal line, wherein the first section (P3-1) is connected to the opening and closing mechanisms (M) of the mould, while the second section (P3-2) rotates from the vertical to the horizontal position and vice versa.

On the edge of the two sections adjacent to the hinge a seat is provided, which is suitable for housing and fixing a wedge (C), in such a way as to prevent the inclination of the tiltable section during the normal moulding phases. Decelerators (D) applied to the two sections of the front mould-holder adjust the opening stress of the tiltable section to support the different weights of different mould-holders.

## Description

### DESCRIPTION

The present invention concerns the sector of machines for the injection moulding of plastic materials, and in particular it concerns a machine for the moulding of PVC (polyvinyl chloride) footware.

The machines used at present for the injection moulding of footware in plastic material comprise a series of moulds installed on a structure (rotary table) that positions the moulds in correspondence with the various working stations.

Each mould is constituted by two half-moulds - upper and lower - for the moulding of the sides of the item to be produced, and by one or two moulds, positioned frontally with respect to the other two, for the moulding of the upper and of the sole in different colours and/or materials.

The front mould-holder is constituted by a vertical plate to which the different front moulds are applied by means of "rapid" couplings.

While the opening of the two upper and lower mould-holders is achieved through the rotation of the upper mould-holder around a hinge point positioned on the central side of the rotary structure, the opening of the front mould-holder is achieved through a sliding movement in radial direction with respect to the structure and, when it is necessary to change the front mould, the front mould-holder performs a rotary movement around the radial translation axis.

This opening system of the mould-holders makes service and repair operations on the upper and lower moulds rather difficult, since the presence of the front mould-holder plate makes it necessary to introduce the two upper and lower half-moulds from beside and transversally, with a rather complicated procedure.

This operation is made even more difficult by the presence of the adjacent moulds.

The insertion and removal of the moulds is long and delicate and involves the risk of damaging the moulds or the mould-holders or of dropping the moulds.

In order to overcome all the drawbacks mentioned above, a new rotary machine has been designed and implemented for the production of PVC boots and footwear in general, equipped with partially tiltable front mould-holder.

The new machine substantially comprises a circular structure of known type, on which mould-holder units are installed, each one of said mould-holder units being provided with lower mould-holder, upper mould-holder and front mould-holder.

The upper and lower mould-holders are substantially similar to the known types of mould-holders, while the front mould-holder features some innovations.

This new front mould-holder comprises a plate divided in two sections that are hinged to each other along a horizontal line.

One of the two sections of the front mould-holder houses one of the two front moulds and is connected to the mechanism that opens the whole mould (radial translation, rotation).

The second section of the front mould-holder is connected to said first section by means of a common hinge that permits its tilting from a vertical to a horizontal position towards the outside of the structure, in opposite direction with respect to the other two upper and lower mould-holders.

When the two sections are in operating position for the moulding of the footwear, their surface facing the upper and lower moulds is level and continuos, that is, they are positioned on the same vertical plane. Pneumatic decelerators are provided to adjust the opening of the tiltable section of the front mould-holder.

On one part or on the whole length of the common edge between the two sections of the front mould-holder a seat is obtained, which is suitable for housing a wedge that is fixed to both sections of the front mould-holder. Said wedge, which is removed when the tiltable section of the front mould-holder is tilted and inserted when the moulds are used, ensures that the tiltable section of the front mould-holder does not open or is not inclined during the normal moulding operations.

It is advisable to structure the machine so that the hinge line between the two sections of the front mould-holder is such that the tilted section of the front mould-holder is positioned at the same height as the lower fixed mould-holder.

The front mould-holder can be intended even as an independent part, to be applied to existing machines for footwear production.

The new rotary machine for the production of PVC footwear in general, constructed as described above, with the front mould-holder divided in two sections, ensures easy and smooth changing of the upper and lower moulds. In fact, when the moulds must be changed, it is sufficient to tilt the tiltable section of the front mould-holder and then remove the moulds and insert the new ones from the front, with free access to the upper and lower mould-holders; there is no need to perform complicated and dangerous movements to insert or remove the moulds.

The following is just an example among many of a practical embodiment of the invention in question, illustrated in the enclosed drawings, wherein:

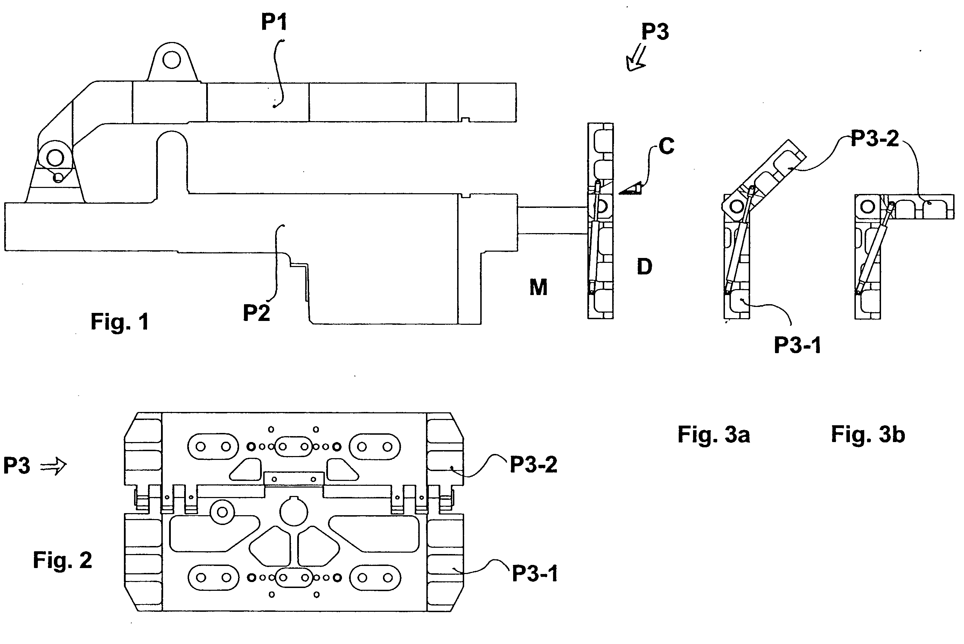

Figure 1 is a side view of the mould-holders (P1, P2, P3) of the new machine for the production of PVC footwear, while Figure 2 is a front view of the front mould-holder (P3).

It is possible to observe that the front mould-holder (P3) comprises a vertical plate divided in two sections (P3-1, P3-2); one of these sections (P3-1) is connected to the mechanism (M) that moves the front mould-holder (P3), while the other section (P3-2) is hinged to the first one in such a way as to be capable of rotating from the vertical to the horizontal position and vice versa.

Figures 3a and 3b respectively show an intermediate moment and the final, tilted position of the tiltable section (P3-2) of the front mould-holder (P3).

Decelerators (D) are applied between the two sections (P3-1, P3-2) of the front mould-holder (P3), in such a way as to adjust the opening of the tiltable section (P3-2).

A wedge (C) applied between the two sections (P3-1, P3-2) of the front mould-holder (P3) guarantees the rigidity of the two sections (P3-1, P3-2) of the front mould-holder (P3) during moulding operations.

Therefore, with reference to the above specifications and to the enclosed drawings, the following claims are put forth.

## Claims

1. Rotary machine for the production of PVC boots and footwear in general, in two or more colours and/or materials, **characterized in that** it is equipped with a front mould-holder divided in two sections that are hinged to each other horizontally, and wherein a first section is connected to the opening and closing mechanisms of the mould, while the second section rotates from the vertical to the horizontal position and vice versa.

2. Rotary machine for the production of boots and footwear in general according to claim 1, **characterized in that** the two sections are provided, on the edge adjacent to the hinge, with a seat suitable for housing and fixing a wedge, in such a way as to prevent the inclination of the tiltable section during the normal moulding phases.

3. Rotary machine for the production of boots and footwear in general according to claims 1 and 2, **characterized in that** it is provided with decelerators applied to the two sections of the front mould-holder, in order to adjust the opening stress of the tiltable section and support the different weights of different mould-holders.

4. Front mould-holder for machines for the production of PVC boots and footwear in general, in two or more colours and/or materials, **characterized in that** it comprises two sections hinged to each other on a horizontal line, and wherein the upper section can be tilted outwards until its surface for the application of the mould is aligned with the surface of the lower mould-holder, and wherein a wedge can be inserted between the two sections and fixed to them to prevent any inclination of the tiltable section during operation.
